# EUROPÄISCHE PATENTSCHRIFT

(11) **EP 0 461 456 B1**
(45) Veröffentlichungstag und Bekanntmachung des Hinweises auf die Patenterteilung: **09.04.1997**
(21) Anmeldenummer: 91108607.2
(22) Anmeldetag: 27.05.1991
(51) Int. Cl.: G06K 19/04, G06K 19/00

(54) **Datensichereitssystem für eine EDV-Einrichtung**
Data security system for computer device
Système de sécurité de données pour dispositif informatique

(30) Priorität: 11.06.1990 DE 4021199
(43) Veröffentlichungstag der Anmeldung: 18.12.1991
(73) Patentinhaber: SMARTDISKETTE GmbH, D-65510 Idstein (DE)
(72) Erfinder: Barrett, Paul, Worcester Park, Surrey KT4 7PU (GB); Eisele, Raymund H., W-6270 Idstein (DE)
(74) Vertreter: Leineweber, Jürgen, Dipl.-Phys.

(56) Entgegenhaltungen:
- EP-A- 246 025
- EP-A- 0 246 025
- EP-A- 0 373 411
- CH-A- 664 635
- DE-U- 8 709 268
- US-A- 4 774 618
- US-A- 4 926 330
- US4926330
- WO90/04847
- WO90/04847

## Beschreibung

Die Erfindung bezieht sich auf ein Datensicherheitssystem für eine EDV-Einrichtung sowie auf ein Verfahren zum Betrieb dieses Datensicherheitssystems.

Aus der älteren, nicht vorveröffentlichten europäischen Patentanmeldung 89121870.3 ist ein in EDV-Einrichtungen einsteckbares Element bekannt, das als Diskette ausgebildet und mit einer besonderen Schnittstelle ausgerüstet ist. Diese Schnittstelle ist derart ausgebildet, daß eine Datenübertragung zwischen einem in der Diskette (oder auch Kassette) befindlichen Prozessor und der EDV-Einrichtung über die in der EDV-Einrichtung ohnehin vorhandenen Schreib-/Leseeinrichtungen durchführbar ist. Der besondere, mit diesen Merkmalen verbundene Vorteil besteht darin, daß ein Datenaustausch zwischen dem Prozessor der Diskette (oder Kassette) und der EDV-Einrichtung möglich ist, ohne daß zusätzliche Schnittstellen erforderlich sind. Ziele der vorgeschlagenen Maßnahmen nach der älteren europäischen Patentanmeldung sind, den Zugang zu einer EDV-Einrichtung sicherer zu machen und einen sicheren Kopierschutz zu ermöglichen.

Zum Stand der Technik gehört der Inhalt der folgenden Dokumente:
CH-A 664 635:
   Dieses Dokument offenbart eine schreibstiftförmige Kassette zum bargeldlosen Bezahlen von Dienstleistungen und Waren. Es ist mit optischen Markierungen ausgerüstet, die von einem optischen Lesegerät lesbar sind.
EP-A-246 025:
   Es wird eine Kassette mit einem nicht-flüchtigen Speicher beschrieben, die in ein Schreib/Lesegerät eines Personal-Computer einsteckbar ist. Die Schnittstelle zwischen Kassette und PC ist mit elektrischen Berührungskontakten (22) ausgestattet.
US-A-49 26 330:
   In diesem Dokument ist eine Diagnose-Vorrichtung für Fahrzeuge offenbart, in die eine mit einem nicht-flüchtigen Speicher ausgerüstete Kassette einsteckbar ist.
W0 90/04847:
   Dieses Dokument beschreibt einen Adapter für eine EDV-Einrichtung. Er hat die äußere Form einer Diskette und ist in die Diskettenstation der EDV-Einrichtung einsteckbar. Er ermöglicht den Anschluß verschiedener Peripher-Einrichtungen über die Diskettenstation an die Zentraleinheit der EDV-Einrichtung.

Der Adapter ist mit einem zusatzlichen Bauteil ausgerüstet, das sich im eingesteckten Zustand außerhalb der EDV-Einrichtung befindet und das als Vorrichtung zum Anschluß weiterer EDV-Einrichtungen ausgebilded ist.

Keines der Dokumente offenbart besondere Maßnahmen, welche dazu dienen, den Zugriff von Daten bei der Kommunikation einer EDV-Einrichtung mit der jeweils darin einsteckbaren Diskette oder Kassette sicherer zu machen.

Der vorliegenden Erfindung liegt die Aufgabe zugrunde, ein Datensicherheitssystem der eingangs erwähnten Art sowie ein Betriebsverfahren dafür zu schaffen, das eine Vervielfachung der Anwendungsmöglichkeiten des in der älteren europäischen Patentanmeldung 89121870.3 offenbarten Datensicherheitssystems erlaubt.

Erfindungsgemäß wird diese Aufgabe durch die Merkmale der Patentansprüche gelöst.

Wesentlicher Vorteil dieser Maßnahmen ist, daß eine direkte oder indirekte (kontrollierte) Kommunikationsverbindung zwischen den angeschlossenen EDV-Einrichtungen und dem Zentralrechner nur über das Element hergestellt wird. Mit dem im Element vorhandenen Prozessor können Operationen, wie z.B. das Verschlüsseln oder Entschlüsseln von Daten, eine Überprüfung der Benutzerberechtigung usw., durchgeführt werden. Im zusätzlichen Bauteil untergebrachte oder über das zusätzliche Bauteil angeschlossene EDV-Komponenten können größere Ausmaße haben als dies bei einem vollständig einsteckbaren Element möglich ist. Selbständige EDV-Einrichtungen (z.B. ein Modem) können im zusätzlichen Bauteil untergebracht werden. Die Möglichkeiten, weitere EDV-Einrichtungen an das Element oder an das Bauteil anzuschließen, erlauben eine Daten-Kommunikation der im Element und/oder im zusätzlichen Bauteil befindlichen EDV-Komponenten mit dem Zentralrechner, in den das Element eingesteckt ist, sowie mit den EDV-Komponenten der an das Bauteil angeschlossenen EDV-Einrichtungen. Auch Bedienungselemente (Tastatur, Display o.dgl.) können am externen Bauteil vorgesehen sein, so daß diese auch bei eingesteckter Diskette oder Kassette sichtbar bzw. handhabbar sind.

Zweckmäßig ist das externe Bauteil aus der Diskette herausziehbar oder herausklappbar. Die Kommunikation erfolgt über Kabel oder über Funk, Infrarot, Microwelle o.dgl. Das externe Bauteil kann neben einer Anzeige auch eine Tastatur, eine Schreib-/ Leseeinrichtung für Chipkarten, wahlweise eine oder mehrere Batterien sowie ein Modem mit einem weiterführenden Kabel umfassen, das aus dem Bauteil herausgeführt wird, zum Anschluß z.B. an eine Telefonleitung. Es kann auch ein Kabel vorhanden sein, das direkt mit dem Prozessor verbunden und aus dem weiteren Bauteil herausgeführt wird, um mit externen Geräten, wie z.B. Streamer Tape, LAN, Sprachein-/ausgabe oder einem anderen Element zum Austausch von Daten verbunden werden zu können. Der Modem oder der Prozessor können auch in das einsteckbare Element unmittelbar integriert werden. Das externe Bauteil ist dann ein aus dem Element herausführendes Kabel, das mit weiteren EDV-Einrichtungen verbunden werden kann. Das einsteckbare Element kann ferner mit Zusatzspeicher in der Größenordnung mehreren Megabytes zur Speicherung von Daten und Programmen versehen werden.

Typischerweise werden Chipkarten in eine Chipkartenschreib- /Leseeinrichtung (mit oder auch ohne Tastatur) gesteckt, die über ein Kabel mit einer Kommunikationseinrichtung einer EDV-Einrichtung verbunden ist. Nachteilig daran ist, daß die Chipkartenschreib- /Leseeinrichtungen nicht nur teuer sind (Sie müssen gegen Ausforschung speziell geschützt werden, da sie im Regelfall allgemein zugänglich sind.), sondern auch eine Kommunikationseinrichtung z. B. an einem PC belegen. Problematisch ist auch deren Einsatz in Verbindung mit tragbaren PCs, da die Chipkartenschreib- /Leseeinrichtung noch zusätzlich mitgeschleppt werden muß. Weiterhin kann der Inhalt einer Chipkarte nur über solche Einrichtungen gelesen werden.

Zur Übertragung von Daten z. B. über Telefonleitungen werden üblicherweise Modems benutzt. Die meisten PCs haben jedoch keinen eingebauten Modem, es müssen also externe Modems benutzt werden. Ein externer Modem wird dann über eine Kommunikationseinrichtung (wenn dafür noch Platz ist) mit dem PC verbunden. Bei z. B. tragbaren PCs ist dies aufwendig, da neben dem PC auch noch ein Modem transportiert werden muß.

Um Daten, die sich auf der Festplatte eines PCs befinden auf ein Magnetband auszulagern (zu sichern) wird üblicherweise ein Magnetbandgerät (streamer tape) über die Kommunikationseinrichtung des PCs angeschlossen. Diese Kommunikationseinrichtungen haben üblicherweise einen Datendurchsatz vom maximal 19.200 bps. Dies bedeutet, um eine Festplatte mit 40 MB zu sichern, werden ca. 5 Stunden benötigt. Über eine übliche Kommunikationseinrichtung können auch PCs miteinander verbunden werden oder andere externe Einheiten angeschlossen werden. Die Beschränkung liegt jedoch bei dem Datendurchsatz.

Typischerweise können auf einer 3 1/2 "-Diskette maximal 1,4 MB gespeichert werden. Dies bedeutet, daß zum Auslagern der Daten einer Festplatte einige Disketten benötigt werden. Wichtige Daten, die nicht gestohlen werden dürfen, müssen deshalb entweder auf (teuren) Wechselplatten gespeichert oder auf einige Disketten ausgelagert werden, um z. B. im Tresor eingeschlossen zu werden.

Dadurch, daß nach der vorliegenden Erfindung das weitere Element nicht nur herausziehbar oder herausklappbar sondern mit einem Kabel oder über Funk, Infrarot oder Microwellen verbunden ist und es neben der Anzeige auch eine Tastatur und eine Schreib-/ Leseeinrichtung für Chipkarten enthält, kann es einfach gehandhabt werden und ein Benutzer kann mit einer in das Element eingesteckten Chipkarte kommunizieren. Damit steht ein kleines und tragbares Gerät zur Verfügung, über das man mit einer Chipkarte Informationen austauschen kann. Ferner, wenn zwischen einem PC und einer Chipkarte Daten ausgetauscht werden sollen, kann dies durch den Einsatz der erweiterten SmartDiskette mit jedem PC (auch mit tragbaren PCs) bequem erfolgen. Dies ist besonders vorteilhaft, wenn z.B. batteriebetriebene tragbare PCs im Außendienst eingesetzt werden, wo üblicherweise keine Steckdose für den Anschluß eines Chipkartenschreib-/Lesegeräts zur Verfügung steht.

Dadurch, daß ein Modem in die SmartDiskette oder in das weitere Element integriert wird, können ohne großen Aufwand von jedem beliebigen Ort, sofern z.B. eine TAE-Anschlußdose zur Verfügung steht, Daten mit einer anderen EDV-Einrichtung über eine Telefonleitung ausgetauscht werden.

Die bei PCs üblichen Diskettenstationen arbeiten mit einer Datenübertragunsrate von 500 kbps. Durch den Einsatz der Smartdiskette mit der Magnetschnittstelle und einem Kabel, das aus der SmartDiskette herausgeführt wird, kann mit externen Einheiten mit dieser Datenübertragungsrate kommuniziert werden. Dies ist besonders vorteilhaft, wenn z.B. von der Festplatte Daten auf eine Magnetbandstation (streamer tape) ausgelagert oder von dort zurückkopiert werden müssen. Ein weiterer Vorteil ist, daß eine so ausgestattete SmartDiskette bequem von einem PC zu einem anderen transportiert werden kann, wenn z.B. von mehreren PCs Sicherungskopien gezogen werden müssen. Diese hohe Datenübertragungsrate ist ferner beim Einsatz von Sprachein-/Ausgabegeräten und bei einem Anschluß an ein LAN erforderlich. Sollen z.B. zwei PCs miteinander verbunden werden (um Daten z.B. von einem tragbaren PC auf einen anderen zu kopieren) ist dies mit einer so ausgestatteten SmartDiskette bequem und schnell möglich. Dazu wird in jeden PC eine entsprechend ausgestattete SmartDiskette gesteckt, diese werden über die herausgeführten Kabel verbunden und ein Datenaustausch kann mit einer Geschwindigkeit von bis zu 500 kbps erfolgen.

Die SmartDiskette in der Ausprägung als RAM-Disk mit einem Zusatzspeicher von mehreren Megabytes (ca 40 MB) ist einerseits hervorragend dazu geeignet, um mit hoher Geschwindigkeit (500 kbps) auf eine oder wenige SmartDisketten von der Festplatte Sicherungskopien zu ziehen und andererseits dazu geeignet, wichtige Daten erst gar nicht auf die Festplatte zu laden, sondern nur auf der SmartDiskette zu halten und dort zu verändern, erweitern oder zu löschen. Wenn, wie üblicherweise wichtige Daten auf der Festplatte gehalten werden, sind diese verschlüsselt. Dies nutzt jedoch wenig, wenn der PC mitsamt der Festplatte gestohlen wird. Die Daten können zwar, wenn sie gut verschlüsselt sind, nicht gelesen werden, der rechtmäßige Besitzer kann jedoch nicht mehr darauf zugreifen. Mit der RAM-SmartDiskette können die Daten immer dann, wenn sie nicht benötigt werden, auf geringem Raum in einen Tresor geschlossen werden oder der Besitzer trägt sie sogar bei sich.

Der Zusatzspeicher nicht nur der RAM-SmartDiskette sondern auch der anderen Ausprägungen kann dazu verwendet werden, um z.B. das gesamte (PC-)Betriebssystem und weitere Programme zu speichern. Um einen PC zu benutzen, wird nach Eingabe eines Geheimcodes, die SmartDiskette in den Diskettenschacht gesteckt. Beim booten wird zuerst das Betriebssystem und dann weitere Programme (z.B. ein PC-Schutzprogramm) in den Hauptspeicher eingelesen. Der Vorteil liegt dabei darin, daß Viren, die sich im PC (z.B. im Bootsektor) befinden erst garnicht aktiviert werden. Durch ein auf der SmartDiskette befindliches PC-Schutzsystem kann ferner sichergestellt werden, daß nur solche Programme und Dateien verarbeitet werden, die nicht illegal verändert wurden.

Vorteile, Einzelheiten und Anwendungsmöglichkeiten der erweiterten Erfindung sollen anhand von in den Figuren schematisch dargestellten Ausführungsbeispielen erläutert werden.

Es zeigen:
- Fig. 1: eine SmartDiskette mit herausziehbarem oder herausklappbarem Erweiterungsbauteil, das neben der Anzeige auch eine Tastatur und eine Einrichtung zum Lesen und Beschreiben von Chipkarten enthält.
- Fig. 2: eine SmartDiskette mit einem Erweiterungsbauteil, das neben der Anzeige auch eine Tastatur und eine Einrichtung zum Lesen und Beschreiben von Chipkarten enthält und über ein Kabel oder über Funk, Infrarot oder Microwellen mit dem in die EDV-Einrichtungen einsteckbaren Element verbunden ist.
- Fig. 3: eine SmartDiskette nach der Erfindung mit im Erweiterungsbauteil befindlichem Modem sowie mit nach außen führenden Kabeln, die mit dem Modem bzw. dem Prozessor verbunden sind.
- Fig. 4: eine SmartDiskette mit integriertem Modem, das mit einem nach außen führenden Kabel verbunden ist, sowie ein nach außen führendes Kabel, das direkt mit dem Prozessor verbunden ist.
- Fig. 5: eine SmartDiskette mit einem Zusatzspeicher in der Größenordnung mehrerer Megabytes.

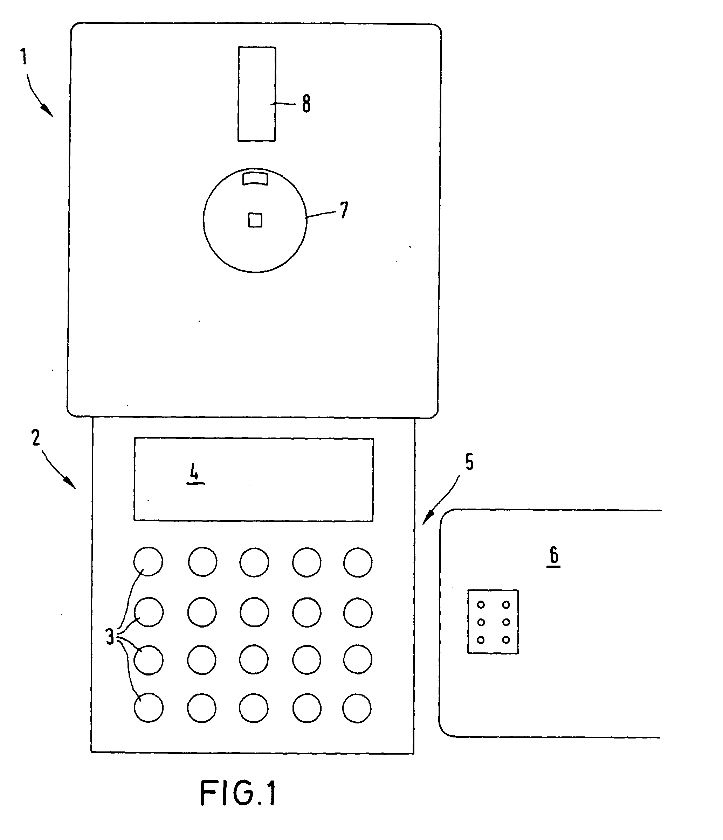

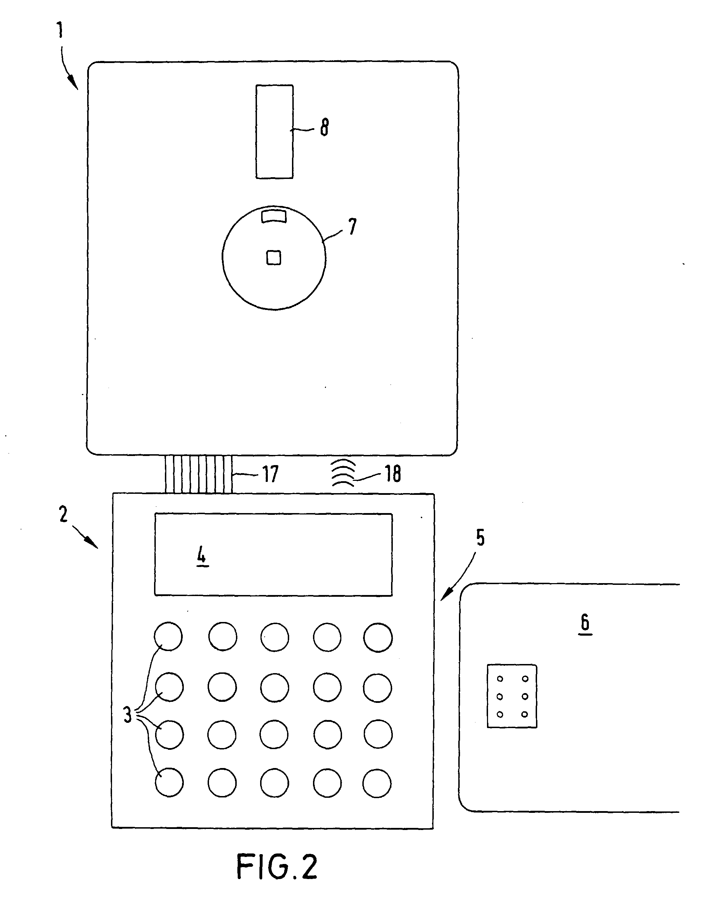

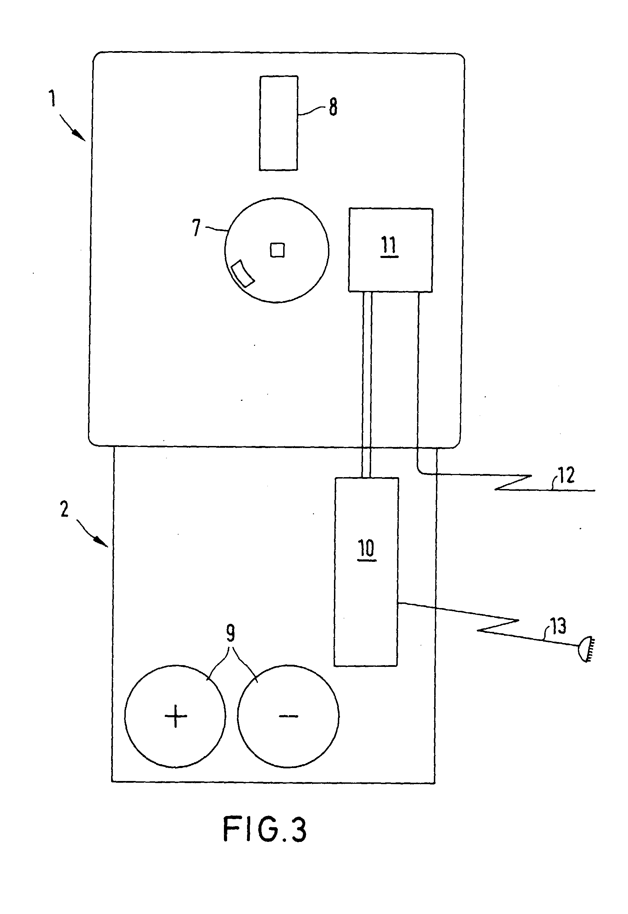

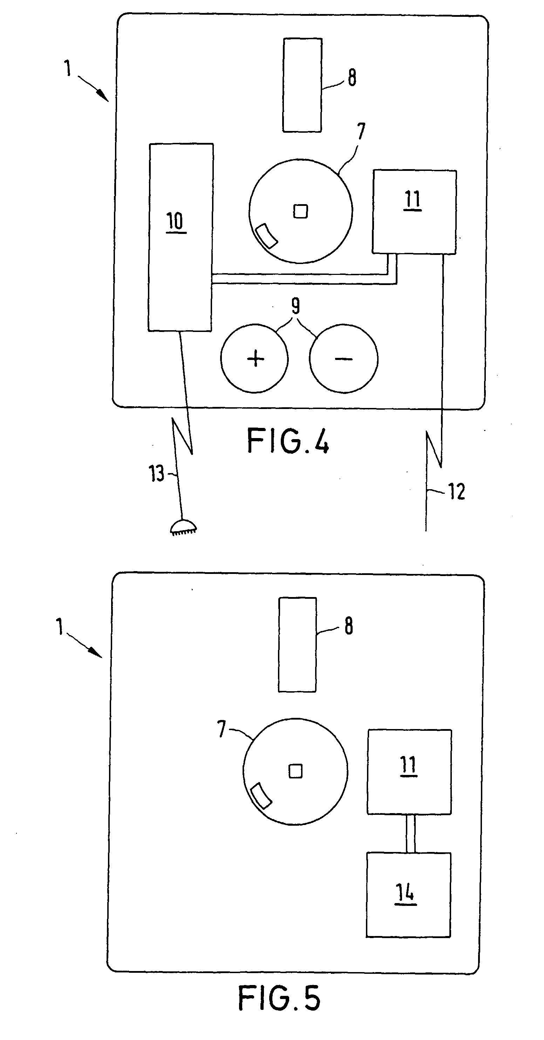

Die in Figur 1 und 2 dargestellten SmartDisketten 1 sind um ein Bauteil 2 erweitert, das mit einer Tastatur 3, einer Anzeige 4, einer Chipkartenschreib-/Leseeinrichtung 5, in die eine Chipkarte 6 gesteckt werden kann, ausgerüstet ist. Das Bauteil 2 ist aus der Diskette 1 herausziehbar. Die Diskette 1 ist im wesentlichen so gestaltet, wie es in der älteren europäischen Patentanmeldung 89121870.3 beschrieben ist. Lediglich ein Rotor 7, der Bestandteil eines Stromgenerators sein kann, sowie die besondere Schnittstelle 8 sind schematisch dargestellt. Wahlweise ist die Diskette bzw. das Bauteil 2 noch mit einer oder mehreren Batterien 9 ausgestattet (vgl. Figur 3 und 4).

Bei den Ausführungsbeispielen nach den Figuren 1 und 2 können, wenn die Chipkarte 6 in die Schreib-/Leseeinrichtung 5 gesteckt ist, über die Tastatur 3 Informationen (z.B. die Persönliche Identifikations Nummer, PIN) in die Chipkarte 6 eingegeben oder Informationen aus der Chipkarte 6 über den Display 4 ausgegeben werden. Ferner können über die Magnetschnittstelle 8 der SmartDiskette 1 und die Diskettenstation zwischen dem PC und der Chipkarte 6 Daten ausgetauscht werden.

Beim Ausführungsbeispiel nach Figur 2 kommuniziert das Erweiterungsbauteil 2 mit der SmartDiskette 1 entweder über ein Kabel 17 oder über Funk, Infrarot oder Microwellen 18. Dieses Ausführungsbeispiel hat den Vorteil, daß das Erweiterungsteil 2 auch dann bequem bedient und der Display abgelesen werden kann, wenn die SmartDiskette 1 in der Diskettenstation des PCs steckt. Ein Beispiel dafür ist, wenn in der SmartDiskette eine elektronische Signatur erzeugt werden soll, kann der Benutzer die zu signierenden Werte auf dem Display 4 ansehen und diese wahlweise über die Tastatur 3 zur Erzeugung der Signatur freigeben. Somit werden nur solche Werte signiert, die der Benutzer gesehen und freigegeben hat.

Die in den Figuren 3 und 4 dargestellte SmartDiskette 1, 2 enthält neben dem Prozessor 11 einen in der Diskette 1 oder im externen Bauteil 2 integrierten Modem 10, der mit einem nach außen führenden Kabel 13 (V.24/V.35/TEA) zur Übertragung von Daten z.B. über das Telefonnetz verbunden ist. Ferner ist ein nach außen führendes Kabel 12 (V.24/V.35/Coaxial,Twinax) dargestellt, das direkt mit dem Prozessor 11 verbunden ist. Von einem PC können über die Diskettenstation, die Magnetschnittstelle der SmartDiskette, den Prozessor 11 und das Kabel 12 Daten mit externen Geräten, wie z.B. einem Streamer Tape, mit einem Durchsatz von ca. 500 kbps ausgetauscht werden.

Die in Figur 5 dargestellte SmartDiskette 1 enthält neben dem Prozessor 11 und den weiteren hier nicht dargestellten Einrichtungen einen Zusatzspeicher 14 mit einer Kapazität von mehreren Megabytes, der zum Sichern von auf einer Festplatte gespeicherten Daten mit einer Geschwindigkeit von ca. 500 kbps eingesetzt werden kann. Ferner kann der Zusatzspeicher 14 dazu verwendet werden, wichtige Daten auf kleinstem Raum zu speichern, zu verändern, zu löschen oder zu erweitern, ohne daß sie auf die Festplatte geladen werden müssen.

Aus der folgenden Auflistung geht die Vielzahl der Anwendungsmöglichkeiten einer nach der Erfindung gestalteten SmartDiskette mit den damit verbundenen Vorteilen hervor:
Anwendungsmöglichkeiten:
- Schreib- /Leseeinrichtung für Chipkarten
- PIN-Eingabe über Tastatur
- Anzeige von Informationen auf dem Display
- Benutzerkommunikation mit Chipkarte
- Kommunikation der Chipkarte mit PC
- Datenfernübertragung über integrierten Modem und herausführendes Telefonkabel
- Datenaustausch mit externen Geräten wie Magnetbandgerät, optische Plattenspeicher, anderen PCs etc.
- Unbegrenzter Speicherplatz (viele Megabytes)
- Co-Prozessor (egal wie groß, nicht von der Dicke der Diskette abhängig)
- Integrierte Sprachein- /ausgabe
Vorteile:
- An jedem PC und an jeder Workstation mit 3 1/2 Zoll-Laufwerk einsetzbar
- In Laptops und Notebooks einsetzbar
- Unabhängig von der Leistungsfähigkeit und des Betriebssystems des PC
- Unabhängig von den verfügbaren Schnittstellen und Steckplätzen im PC
- Unabhängig von der Aufzeichungsdichte des Diskettenlaufwerks
- Keine Normierungsprobleme, normierte Schnittstellen bereits vorhanden
- Keine Hardware-Installationskosten
- Hoher Datendurchsatz (ca. 500 kbit)
- Platzsparend und portabel
- Hohe Speicherkapazität (viele Megabytes)

## Patentansprüche

1. Datensicherheitssystem für eine EDV-Einrichtung, bestehend aus einer Zentraleinheit mit einer Diskettenstation sowie einem der Datensicherung dienenden Element (1) mit den folgenden Merkmalen:
- Es hat die äußere Form einer Diskette;
- es ist mit einem Prozessor (11) und einem Speicher (14) ausgerüstet;
- es ist mit einer Schnittstelle (8) ausgerüstet, welche derart ausgebildet ist, daß ein Datenaustausch zwischen dem Prozessor (11) des Elementes (1) und der Zentraleinheit der EDV-Einrichtung über die in der Diskettenstation vorhandene Schreib-/Leseeinrichtung durchführbar ist;
- es ist mit einem zusätzlichen Bauteil (2,12,13) ausgerüstet, das sich im eingesteckten Zustand außerhalb der EDV-Einrichtung befindet und das selbst EDV-Komponenten und/oder EDV-Einrichtungen umfaßt und als Vorrichtung zum Anschluß weiterer EDV-Einrichtungen ausgebildet ist.

2. Datensicherheitssystem nach Anspruch 1, dadurch gekennzeichnet, daß es neben der Schnittstelle (8) mit EDV-Komponenten, wie Prozessor, Speicher, EDV-Einrichtungen, wie Modem, und/oder Stromversorgungseinrichtungen ausgerüstet ist und daß das zusätzliche Bauteil (2) weitere EDV-Komponenten, EDV-Einrichtungen, Stromversorgungseinrichtungen, Bedienungselemente, wie Tastatur, Display, und/oder Anschlußeinrichtungen, wie Kabel, Chipkarten-Schreib-/ Leseeinrichtung, Sprachein-/ausgabe, aufweist.

3. Datensicherheitssystem nach Anspruch 1 oder 2, dadurch gekennzeichnet, daß das zusätzliche Bauteil (2) mit einer Tastatur (3), einer Anzeige (4) und einer Chipkarten-Schreib-/Leseeinrichtung (5) ausgerüstet ist, so daß der Benutzer mit der Tastatur (3) und der Anzeige (4) über die Chipkarten-Schreib-/Leseeinrichtung (5) mit der Chipkarte (6) kommunizieren kann oder daß von der EDV-Einrichtung über die Magnetschnittstelle und der Chipkarten-Schreib-/Leseeinrichtung (5) mit der Chipkarte (6) Daten ausgetauscht werden können.

4. Datensicherheitssystem nach Anspruch 1 , 2 oder 3, dadurch gekennzeichnet, daß das zusätzliche Bauteil (2) aus dem Element herausziehbar oder herausklappbar ist.

5. Datensicherheitssystem nach einem der Ansprüche 1 bis 4, dadurch gekennzeichnet, daß es mit dem zusätzlichen BauTeil (2) über ein Kabel (7) verbunden ist oder daß Einrichtungen im Element (1) und im zusätzlichen Bauteil (2) vorgesehen sind, die eine drahtlose Kommunikation über Funk, Infrarot, Microwelle ermöglichen.

6. Datensicherheitssystem nach einem der Ansprüche 1 bis 5, dadurch gekennzeichnet, daß das Element (1) oder das zusätzliche Bauteil (2) mit einem Modem (10) sowie mit einem nach außen führenden Kabel (13) ausgestattet ist, das der Verbindung des Modems (10) mit dem Telefonnetz dient.

7. Datensicherheitssystem nach Anspruch 1, dadurch gekennzeichnet, daß das zusätzliche Bauteil ein Kabel (12) ist, über das mit externen Geräten, wie Magnetbandstation, LAN oder Sprachein-/ausgabe Daten ausgetauscht werden können.

8. Element (1) für ein Datensicherheitssystem mit den folgenden Merkmalen:
- Es hat die äußere Form einer Diskette;
- es ist mit einem Prozessor (11) und einem Speicher (14) ausgerüstet;
- es ist mit einer Schnittstelle (8) ausgerüstet, welche derart ausgebildet ist, daß ein Datenaustausch zwischen dem Prozessor (11) des Elementes (1) und der Zentraleinheit der EDV-Einrichtung über die in der Diskettenstation vorhandene Schreib-/Leseeinrichtung durchführbar ist;
- es ist mit einem Zusatzspeicher (14) in der Größenordnung mehrerer Megabytes ausgestattet, wobei der Zusatzspeicher (14) dem Prozessor (11) zugeordnet ist und wobei sich Zusatzspeicher (14) und Prozessor (11) entweder im Element (1), in einem zusätzlichen Bauteil (2) oder verteilt in beiden Bauteilen (1 und 2) befinden.

9. Verfahren zum Betrieb eines Datensicherheitssystems nach einem der Ansprüche 1 bis 7, wobei das gesamte Betriebssystem der EDV-Einrichtung und weitere Programme im Speicher (14) gespeichert sind und beim Start von dort geladen werden.

10. Verfahren zum Betrieb eines Datensicherheitssystems mit einer EDV-Einrichtung, die mit einer Festplatte ausgerüstet ist, nach einem der Ansprüche 1 bis 7, wobei die Sicherungskopien von der Festplatte auf eine oder wenige Elemente (1) mit zusätzlichem Bauteil (2,12,13) abgezogen werden.

11. Verfahren nach Anspruch 10, dadurch gekennzeichnet, daß wichtige Daten nicht auf die Festplatte geladen, sondern nur im Element (1) mit Zusatzbauteil (2,12,13) gespeichert, erweitert, gelöscht oder verändert werden.

## Claims

1. Data security system for an electronic data processing (E.D.P.) device, comprising a central processing unit with a floppy disk drive as well as an element (1) which serves for data protection with the following features:
• it has the external form of a diskette;
• it is equipped with a processor (11) and a memory (14);
• it is equipped with an interface (8) which is designed in such a way that an exchange of data between the processor (11) of the element (1) and the central processing unit of the E.D.P. device is made possible via the read / write device present in the floppy disk drive;
• it is equipped with an additional component (2,12,13) which in the plugged in state is located outside the E.D.P. device and which itself contains E.D.P. components and / or E.D.P. devices and is designed as a device for connecting additional E.D.P. devices.

2. Data security system according to Claim 1, characterised in that besides the interface (8), it is equipped with E.D.P. components such as a processor, memory, E.D.P. devices such as a modem and / or a power supply device, and that the additional component (2) contains further E.D.P. components, E.D.P. devices, power supply devices, controls such as a keyboard, display and / or connection devices such as cables, smart card read / write device and speech input / output.

3. Data security system according to Claim 1 or 2, characterised in that the additional component (2) is equipped with a keyboard (3), a display (4), and a smart card read / write device (5) so that the user can communicate with the smart card (6) using the keyboard (3) and the display (4) via the smart card read / write device (5) or in that data can be exchanged with the smart card (6) from the E.D.P. device via the magnetic interface and the smart card read / write device (5).

4. Data security system according to Claims 1, 2 or 3, characterised in that the additional component (2) can be withdrawn from or pivoted out of the element.

5. Data security system according to one of Claims 1 to 4, characterised in that it is connected with the additional component (2) by a cable (7), or that devices in the element (1) and in the additional component (2) are provided, which enable wireless communication by radio, infrared and microwave.

6. Data security system according to one of Claims 1 to 5, characterised in that the element (1) or the additional component (2) is equipped with a modem (10) as well as with an external cable (13), which serves to connect the modem (10) with the telephone network.

7. Data security system according to Claim 1, characterised in that the additional component is a cable (12) through which data can be exchanged with external equipment such as a magnetic tape drive, LAN or speech input / output.

8. Element (1) for a data security system with the following features:
• it has the external form of a diskette;
• it is equipped with a processor (11) and a memory (14);
• it is equipped with an interface (8) which is designed in such a way that an exchange of data between the processor (11) of the element (1) and the central processing unit of the E.D.P. device is made possible via the read / write device present in the floppy disk drive;
• it is equipped with an additional memory (14) of the order of several megabytes, with the additional memory (14) being assigned to the processor (11) and with the additional memory (14) and the processor (11) being located either in the element (1), in an additional component (2) or divided between both components (1 and 2).

9. Method for the operation of a data security system according to one of Claims 1 to 7, wherein the entire operating system of the E.D.P. device and additional programmes are stored in the memory (14) and are loaded from there at the start.

10. Method for the operation of a data security system with an E.D.P. device which is equipped with a hard disk according to one of Claims 1 to 7, wherein the back-up copies are copied from the hard disk onto one or a small number of elements (1) with the additional component (2,12,13).

11. Method according to Claim 10, characterised in that important data is not loaded onto the hard disk, but is only stored, expanded, deleted or changed in the element (1) with the additional component (2,12,13).

## Revendications

1. Système de sauvegarde des données pour une installation électronique de traitement des informations constitué d'une unité centrale comprenant un lecteur de disquettes de même qu'un élément servant à la sauvegarde des données (1), et ayant les caractéristiques suivantes:
- Il a l'aspect extérieur d'une disquette;
- Il est équipé d'un processeur (11) et d'une mémoire (14);
- Il est équipé d'une interface (8) qui est conçue de telle manière qu'un échange de données entre le processeur (11) de l'élément (1) et l'unité centrale de l'installation électronique de traitement des informations est réalisable via la station de lecture/écriture présente dans le lecteur de disquettes;
- Il est équipé d'un composant auxiliaire (2, 12, 13) qui se trouve, lorsqu'il est enfiché, à l'extérieur de l'installation électronique de traitement des informations; ce composant contient lui-même des composants électroniques de traitement des informations et/ou des installations informatiques, et permet la connexion d'autres installations informatiques.

2. Système de sauvegarde des données caractérisé d'après la revendication 1 par un équipement comprenant, mis à part l'interface (8), des composants électroniques de traitement des informations tels que le processeur et la mémoire, des installations informatiques telles que le modem, et/ou des dispositifs d'alimentation en courant; caractérisé d'autre part par un composant auxiliaire (2) intégrant d'autres composants électroniques de traitement des informations et installations informatiques, des dispositifs d'alimentation en courant, des éléments de commande tels que le clavier et l'écran, et/ou des dispositifs de connexion tels que des câbles, une station de lecture/écriture pour cartes à puce et une entrée/sortie vocale.

3. Système de sauvegarde des données caractérisé d'après les revendications 1 et 2 par un composant auxiliaire (2) équipé d'un clavier (3), d'un affichage (4) et d'une station de lecture/écriture pour cartes à puces si bien que l'utilisateur peut communiquer avec la carte à puce (6) grâce au clavier (3) et à l'affichage (4) via la station de lecture/écriture pour cartes à puce, ou bien procéder à un échange de données de l'installation électronique de traitement des informations avec la carte à puce (6) et de la station de lecture/écriture (5) via l'interface magnétique.

4. Système de sauvegarde des données caractérisé d'après les revendications 1, 2 ou 3 par un composant auxiliaire (2) retirable et escamotable.

5. Système de sauvegarde des données caractérisé d'après l'une des revendications 1 à 4 par le fait qu'il est connecté avec le composant auxiliaire via un câble (7) ou par le fait que les installations prévues dans l'élément (1) et dans le composant auxiliaire (2) permettent une communication sans fil par radio, infrarouges et micro-ondes.

6. Système de sauvegarde des données caractérisé d'après l'une des revendications 1 à 5 par le fait que l'élément (1) ou le composant auxiliaire (2) sont équipés d'un modem (10) et d'un raccordement externe (13) pour la liaison entre le modem (10) et le réseau téléphonique.

7. Système de sauvegarde des données caractérisé d'après la revendication 1 par le fait que le composant auxiliaire est un câble (12) permettant d'échanger des données via des appareils externes tels qu'une unité de bande magnétique, un réseau local (LAN) ou une entrée/sortie vocale.

8. Elément (1) pour un système de sauvegarde des données avec les caractéristiques suivantes:
- Il a l'aspect extérieur d'une disquette;
- Il est équipé d'un processeur (11) et d'une mémoire (14);
- Il est équipé d'une interface (8) qui est conçue de telle manière qu'un échange de données est réalisable entre le processeur (11) de l'élément (1) et l'unité centrale de l'installation de traitement des informations via la station de lecture/écriture présente dans le lecteur de disquettes;
- Il est équipé d'une mémoire supplémentaire (14) d'une taille de plusieurs mégaoctets dédiée au processeur (11); la mémoire supplémentaire (14) et le processeur (11) se trouvent soit dans l'élément (1), soit dans le composant auxiliaire (2), ou bien sont répartis dans ces éléments (1 et 2).

9. Procédure pour le fonctionnement du système de sauvegarde des données d'après l'une des revendications 1 à 7 selon laquelle l'ensemble du système d'exploitation de l'installation électronique de traitement des informations et d'autres programmes sont mis en mémoire dans la mémoire (14) et chargés à partir de cette mémoire lors du démarrage.

10. Procédure pour le fonctionnement du système de sauvegarde des données avec une installation électronique de traitement des informations équipée d'un disque dur, d'après l'une des revendications 1 à 7 selon laquelle les copies de sauvegarde peuvent être effectuées à partir du disque dur sur un ou plusieurs éléments (1) avec le composant auxiliaire (2, 12, 13).

11. Procédure d'après la revendication 10 caractérisée par le fait que des données importantes ne sont pas mises en mémoire, étendues, effacées ou modifiées sur le disque dur mais uniquement dans l'élément (1) avec le composant auxiliaire (2, 12, 13).
